# EUROPÄISCHE PATENTSCHRIFT

(11) **EP 0 553 754 B1**
(45) Veröffentlichungstag und Bekanntmachung des Hinweises auf die Patenterteilung: **10.09.1997**
(21) Anmeldenummer: 93101109.2
(22) Anmeldetag: 26.01.1993
(51) Int. Cl.: H04M 3/42, H04Q 3/10, H04Q 3/545

(54) **Fernsprechnebenstellenanlage mit Sammelanschluss**
Private branch exchange with a collective line
Arrangement de poste téléphonique annexe à lignes groupées

(30) Priorität: 31.01.1992 DE 4202815
(43) Veröffentlichungstag der Anmeldung: 04.08.1993
(73) Patentinhaber: SIEMENS AKTIENGESELLSCHAFT, 80333 München (DE)
(72) Erfinder: Drobek, Erich, W-8025 Unterhaching (DE)

(56) Entgegenhaltungen:
- DE-A- 2 837 856
- DE-A- 3 047 851
- DE-B- 2 312 904

## Beschreibung

Es sind unterschiedliche Fernsprechnebenstellenanlagen bekannt, die neben der eigentlichen Vermittlungssteuerung auch zu einer Steuerung bzw. Realisierung zusätzlicher, über den eigentlichen Vermittlungsvorgang hinausgehender Steuervorgänge befähigt sind. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt ist. Zu solchen Leistungsmerkmalen zählen beispielsweise die Darstellung von Bedienerhinweisen auf optischen Anzeigeeinrichtungen der Endgeräte, Anrufumleitung (Call forwarding) und das Zusammenfassen interner Endgeräte zu Sammelanschlüssen. Ausgestaltungen des Leistungsmerkmals "Sammelanschluß" sind auch aus den deutschen Offenlegungsschriften 28 17 985, 28 37 856, 30 47 851, 34 43 472 sowie aus der deutschen Auslegeschrift 27 32 981 bekannt.

Aus den Produktschriften der Fa. Siemens "HICOM 600 System Product Data", Bestell-Nr. Al9100-K 3161-G430-01-7600 (Seite 19), und "ISDN in the Office", Special Issue of Telcom Report and Siemens Magazin COM, Seiten 56 bis 64, ISBN 3-8009-3849-9 ist bereits eine rechnergesteuerte Fernsprechnebenstellenanlage bekannt, bei der sowohl analoge als auch digitale Terminals zu Sammelanschlüssen innerhalb eines Kommunikationsdienstes zusammengefaßt werden können. Der Sammelanschluß ist unter einer besonderen Sammelanschlußnummer von intern und von extern erreichbar, wobei jeder Sammelanschlußteilnehmer zusätzlich unter seiner persönlichen Rufnummer erreicht werden kann. Der Sammelanschluß läßt sich linear oder zyklisch festlegen: Die Suche nach einer freien Endstelle beginnt immer bei der ersten Nebenstelle eines Sammelanschlusses oder bei der nächsten Nebenstelle nach Entgegennahme eines Anrufs. Sind beispielsweise alle Sprachendgeräte des Sammelanschlusses belegt, gelangen weitere Anrufe zu einem Wartespeicher, gegebenenfalls auch zu einer sogenannten Sammelanschluß-Infobox, in der Anrufer ihre Mitteilungen dann dort hinterlegen können.

Weitergehende Ausgestaltungen des Leistungsmerkmals "Sammelanschluß" wie zum Beispiel die Anschaltung wartender Rufe auf Ansagegeräte oder die Bildung und Anzeige statistischer Daten für eine Kontrollstelle des Sammelanschlusses bedingen beträchtliche Änderungen des vermittlungstechnischen Steuerungsprogramms in dem jeweiligen Kommunikationssystem.

Der Erfindung liegt die Aufgabe zugrunde, eine Fernsprechnebenstellenanlage mit einem Sammelanschluß der eingangs genannten Art anzugeben, die sich bei einer nur geringfügigen Änderung des vermittlungstechnischen Steuerungsprogramms um Leistungsmerkmale im Zusammenhang mit dem Sammelanschluß erweitern läßt.

Die Lösung dieser Aufgabe erfolgt erfindungsgemäß mit den kennzeichnenden Merkmalen des Patentanspruchs 1. Als wesentlich für die Erfindung ist anzusehen, daß vorhandene Fernsprechnebenstellenanlagen, die bereits das Leistungsmerkmal "Sammelanschluß" realisieren, mit einer zweiten Steuerung versehen werden. Diese zweite Steuerung, die sich insbesondere auch als adaptiver Server implementieren läßt, realisiert die weitergehenden, komplexen Prozeduren im Zusammenhang mit dem Sammelanschluß. Das vermittlungstechnische Steuerungsprogramm der Fernsprechnebenstellenanlage, das bereits die Grundform des Leistungsmerkmals "Sammelanschluß" realisiert, ist dagegen nur hinsichtlich des Informationsaustausches mit der zweiten Steuerung zu modifizieren. Dabei können bekannte Softwareschnittstellen verwendet werden, die dem Meldungsaustausch zwischen der Steuerung einer externen Datenverarbeitungsanlage und der Steuerung der Fernsprechnebenstellenanlage dienen. Die Hardware-Architektur der Fernsprechnebenstellenanlage ist bis auf die Anschaltung eines die zweite Steuerung realisierenden Prozessors nicht zu verändern. Die Zahl der nicht mit einem Endgerät beschalteten Teilnehmeranschlußports, die in der eigentlichen Fernsprechnebenstellenanlage für den Sammelanschluß verwendet werden, ist durch ein betriebstechnisches Kommando veränderbar. Damit ermöglicht die Erfindung, vorhandene Fernsprechnebenstellenanlagen an - auch zeitlich - unterschiedliche Anforderungen an die Leistungsfähigkeit eines Sammelanschlusses anzupassen. Die vorhandenen Teilnehmeranschlußports einer Fernsprechnebenstellenanlage lassen sich je nach individuellen Bedürfnissen auf nicht mit Endgeräten beschaltete Ports und auf die zu der Sammelanschlußgruppe zusammengefaßten internen Endgeräten der Fernsprechnebenstellenanlage aufteilen. Dabei ist es in an sich bekannter Weise möglich, Sprachendgeräten der Sammelanschlußgruppe auch eine persönliche Rufnummer zuzuordnen.

Eine vorteilhafte Ausführungsform der Erfindung ist dadurch gekennzeichnet, daß den Teilnehmeranschlußports unterschiedliche Sammelanschlußnummern zugeordnet sind. Damit lassen sich am Sammelanschluß eintreffende Anrufe in Abhängigkeit der gewählten Sammelanschlußnummern auf bestimmte Endgeräte der Sammelanschlußgruppe umkoppeln . Dabei kann weiterhin vorgesehen sein, daß die Umkopplung in Abhängigkeit der gewählten Sammelanschlußrufnummer mit unterschiedlichen zeitlichen Prioritäten erfolgt.

Bei einer weiteren vorteilhaften Ausführungsform der Erfindung ist dem Sammelanschluß ein internes Endgerät der Fernsprechnebenstellenanlage vorgeschaltet, dem mindestens eine Sammelanschlußrufnummer zugeordnet ist. Diesem internen Endgerät ist weiterhin das bekannte Leistungsmerkmal "Anrufumleitung" zugeordnet, so daß es zu dem Sammelanschluß, einem weiteren Sammelanschluß oder beispielsweise auch zu einem Sprachspeicher einstellbar ist. Damit wird eine Umschaltung beispielsweise auf einen Nachtbetrieb oder bei einem Funktionsausfall des Sammelanschlusses in einfacher Weise ermöglicht.

Eine Ausführungsform der Erfindung wird nun anhand der Figur beschrieben. Die in der Figur dargestellte Fernsprechnebenstellenanlage kann wie die in den eingangs beschriebenen Produktschriften offenbarte Nebenstellenanlage bzw. wie das Fernmeldevermittlungssystem strukturiert sein, das in den veröffentlichten europäischen Patentanmeldungen EP 0 306 693 A1 (US-PS 4,903,258), EP 0 303 870 A2 (US-PS 5,018,097) und EP 0 303 869 A1 (US-PS 5,047,923) offenbart ist. Der Software-Architektur des bekannten Systems liegen die folgenden Kriterien zugrunde: Das erste Architektur-Kriterium betrifft die Dreiteilung der Vermittlungs-Software in die Funktionskomplexe Peripherietechnik PP (peripheral processing), Leitungstechnik DH (device handler) und Vermittlungstechnik CP (call processing). Dabei nimmt die Peripherietechnik PP die Transportfunktion wahr und läuft im wesentlichen auf den Anschlußbaugruppen für die Endgeräte und Leitungen. Die Leitungstechnik DH hat die Aufgabe, die Schnittstelle zu Peripherietechnik PP an die ISDN-Schnittstellen zur Vermittlungstechnik CP anzupassen. Die Vermittlungstechnik CP erbringt die eigentlichen Leistungen für die Benutzeroberflächen der Endgeräte bzw. für die Schnittstellen zu den verschiedenen Sätzen.

Das zweite Architektur-Kriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienstspezifisch aufgrund der mitgelieferten Geräteadresse den Gerätetyp ermittelt.

Das dritte Architektur-Kriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Die in der Figur dargestellte Anlage besteht aus einer Systemzentrale PBX mit einem Steuerwerk CC ("erste Steuerung"), das mit sogenannten Peripheriemodulen und einem Koppelnetz SN verbindbar ist. Die Peripheriemodule umfassen insbesondere Teilnehmeranschlußschaltungen SLM11...SLM1X, SLM21...SLM2X, SLMn1 ...SLMnX sowie sogenannte Leitungssatzschaltungen TM11, TM21 und TMn1.

Die Teilnehmeranschlußschaltungen SLM sind teilnehmerorientierte Geräteanschlüsse, wie beispielsweise ISDN-Basisanschlüsse für digitale mono- und multifunktionale Endgeräte, 1-Kanal-Anschlußmodule für Endgeräte, wie digitale Sprachendgeräte und Vermittlungsendgeräte sowie Teilnehmeranschlüsse für analoge Sprachendgeräte. Die in der Figur dargestellten Endgeräte T11, T1x, T21, T2x, Tx sind vorzugsweise digitale Sprachendgeräte, während das Endgerät M ein Datenendgerät darstellt. An Teilnehmerschaltungen SLMnx-1, SLMnx sind ein erstes und ein zweites Ansagegerät AG1, AG2 geschaltet.

Die Leitungssatzschaltungen TM11, TM21, TMn1 dienen zur Verbindung mit öffentlichen und/oder privaten Netzen bzw. Sondereinrichtungen und sind beispielsweise ISDN-Basisanschlüsse für ISDN-Amtsverkehr (Amtsleitungen AL1, AL2, ALn) und ISDN-Querverkehr (2 Kanäle zu 64 kBit/s und ISDN-Signalisierung) sowie digitale Schnittstelleneinheiten (digital interface unit), d. h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Alle Peripheriemodule SLM11..., TM11... haben die gleichen systeminternen Schnittstellen. Sie koppeln die einzelnen Basiskanäle B, auf denen Nutzdaten, d. h. Sprach- und/oder Dateninformationen übertragen werden, an eine beliebige Auswahl aus zwei Multiplexkanälen (highways) mit beispielsweise 32 Kanälen des Koppelnetzes SN und übergeben die in einem Steuerkanal D übertragenen Signalisierungsinformationen als HDLC-Protokoll an die erste Steuerung CC. Jedes Peripheriemodul weist eine Steuerung PBC11... auf, deren Aufgabe es ist, belegte Anschlußkanäle zu ausgewählten Kanälen der Multiplexkanäle gegebenenfalls mit einer Steuerung LTUC1... einer zugehörigen Anschlußeinheit LTU1... zuzuordnen (europäische Patente 0 113 884 und 0 264 890, US-Patent 4,694,452).

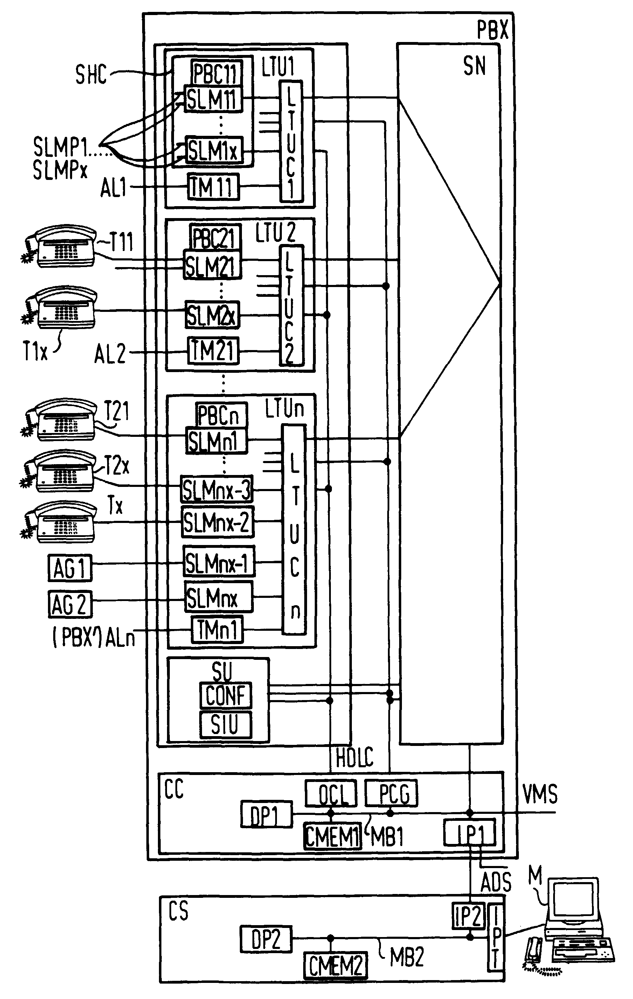

Mehrere Peripheriemodule können funktionell zu einer Anschlußeinheit LTU zusammengefaßt werden. Jeder Anschlußeinheit LTU1 ...LTUn ist eine Steuerung LTUC1...LTUCn zugeordnet und mit dem Koppelnetz SN über beispielsweise vier Sprach-Daten-Multiplexkanäle miteinander verbunden. Der Meldungsaustausch zwischen den Peripheriemodulen und der ersten Steuerung CC erfolgt über einen Signalisierungskanal, der in Figur 1 mit dem Bezugszeichen HDLC bezeichnet ist, im bekannten HDLC-Punkt- zu -Mehrpunkt-Verfahren.

Mehreren Anschlußeinheiten LTU1...LTUn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen, sowie den Empfang von MFV-Taktwahlzeichen und Amtswähltönen. Diese Funktion wird in an sich bekannter Weise mit Signalprozessoren realisiert.

Die Signalisierungseinheit SIU ist über zwei Sprach-Daten-Multiplexkanäle bei fester Funktionszuordnung mit dem Koppelnetz SN verbunden.

Das Koppelnetz SN ist vorzugsweise modular aufgebaut und besteht beispielsweise aus einer blockierungsfreien Zeitstufe für 16-Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben 1-Kanal-Verbindungen können auch Breitbandverbindungen hergestellt werden.

Die erste Steuerung CC übernimmt die entsprechend dem Peripherieaufbau anfallende vermittlungstechnische Verarbeitung. Sie besteht aus einem Datenprozessor DP1, einem Prozessor für Signalisierungssteuerung DCL, einem Taktgenerator PCG, einem Speicher CMEM1 und einem Schnittstellenprozessor IP1, der mit einer betriebstechnischen Einheit ADS verbindbar ist. Der Speicher CMEM1 enthält eine Datenbasis mit Konfigurationsdaten sowie das der Steuerung CC zugeordnete Programm. Die genannten Komponenten sind über einen Multibus MB1, wie in der Figur dargestellt, miteinander verbunden. Die betriebstechnische Einheit ADS ist mit dem Prozessor IP1 verbindbar. An diesen ist auch ein adaptiver Server mit einer zweiten Steuerung CS (Control Server) angekoppelt. Die Steuerung CS umfaßt einen Datenprozessor DP2, einen Speicher CMEM2 und Schnitstellenprozessoren IP2 und IPT. Die genannten Komponenten sind wie in der Figur dargestellt miteinander verbunden. Im Speicher CMEM2 ist das der Steuerung CS zugeordnete Programm abgelegt.

Für die Datenprozessoren DP1, DP2 werden vorzugsweise Prozessoren der Reihe SAB 8086/80286 (Fa. Siemens) verwendet. Der Speicher CMEM1 enthält hochintegrierte dynamische RAM-Bausteine und Fehlerkorrekturschaltungen.

Der Prozessor DCL für Signalisierungssteuerung dient dem Abwickeln des HDLC-Protokolls zu den Anschlußeinheiten LTU1... LTUn und der Serviceeinheit SU.

Der Taktgenerator PCG führt die Taktversorgung der Fernmeldenebenstellenanlage durch.

Bei der in der Figur dargestellten Fernsprechnebenstellenanlage bilden die Teilnehmeranschlußports SLMP1...SLMPx einen Sammelanschluß (station hunting, SHC), wobei an diese Teilnehmeranschlußports keine Endgeräte angeschlossen sind. Diese Ports sind konfigurierte Ports der an sich bekannten und schon beschriebenen Teilnehmeranschlußschaltungen SLM11...SLM1x. Die Endgeräte T21...T2x sind zu einer Sammelanschlußgruppe zusammengefaßt. Der ersten Steuerung CC ist ein Steuerungsprogramm zugeordnet, mit dem unter anderem das Leistungsmerkmal "Sammelanschluß" realisiert wird. Dementsprechend koppelt die erste Steuerung CC interne und externe Anrufe mit der Sammelanschlußrufnummer auf die Teilnehmeranschlußports SLMP1...SLMPx um. Erfindungsgemäß ist der ersten Steuerung CC, die bei der hier dargestellten Ausführungsform auch mit den Steuerungen LTC1..., und PBC11..., zusammenarbeitet, und einer zweiten Steuerung CS ein Steuerungsprogramm zugeordnet, das in der Weise ausgestaltet ist, daß die erste Steuerung CC der zweiten Steuerung CS eine die Anrufumkopplung und den Teilnehmeranschlußport SLMP1 bezeichnende erste Information zuführt. Nachdem die zweite Steuerung CS diese Information erhalten hat, bildet sie eine zweite Information, die ein internes Endgerät T21...T2x der Sammelanschlußgruppe, ein Ansagegerät AG2, AG2 oder einen Sprachspeicher VMS bezeichnet. Weiterhin kann die zweite Information eine externe Zieladresse, beispielsweise einer vernetzten Nebenstellenanlage PBX' oder einer sonstigen Einrichtung (Hauptanschluß) bezeichnen. Eine solche externe Adresse wird insbesondere bei Überlast bzw. im Nachtbetrieb gebildet. Die letztgenannte zweite Information wird der ersten Steuerung CC zugeführt, die entsprechend dieser Information den am Teilnehmeranschlußport SLMP1 gehaltenen Anruf auf das durch die zweite Information bezeichnete interne Endgerät T21, das Ansagegerät, den Sprachspeicher VMS oder die externe Zieladresse umkoppelt. Dabei kann für den Fall, daß alle internen Endgeräte T21...T2x der Sammelanschlußgruppe besetzt sind, vorgesehen sein, daß die Anrufe an den Teilnehmeranschlußports für eine konfigurierbare Zeit gehalten werden. In dieser Zeit wird dem rufenden Teilnehmer das Freizeichen zugeführt. Nach Ablauf einer Maximalzeit, in der an den Teilnehmeranschlußports wartende Anrufe gehalten werden, ohne daß eine Umkopplung zu einem freigewordenen Endgerät der Sammelanschlußgruppe erfolgt ist, können Anrufe einem ersten Ansagegerät AG1 zugeführt werden. Das erste Ansagegerät spricht vorzugsweise eine Begrüßung zu. Nachdem die Begrüßung zugesprochen ist, wird wiederum geprüft, ob ein zur Sammelanschlußgruppe gehörendes Endgerät T21...T2x frei ist. Ist dies der Fall, wird der Anruf nunmehr auf ein freies Endgerät der Sammelanschlußgruppe umgekoppelt. Ist zu diesem Zeitpunkt, d. h. nach Beendigung der Begrüßung, kein Endgerät der Sammelanschlußgruppe frei, wird der Anruf einem zweiten Ansagegerät AG2 zugeführt, das Musik aussendet. Während ein Anruf auf das zweite Ansagegerät AG2 umgekoppelt ist, wird fortlaufend geprüft, ob ein Endgerät der Sammelanschlußgruppe frei wird. Ist dies der Fall, wird der am zweiten Ansagegerät AG2 anstehende Anruf auf das betreffende freigewordene Endgerät der Sammelanschlußgruppe umgekoppelt.

Ein am zweiten Ansagegerät AG2 anstehender Anruf wird auf den Sprachspeicher VMS umgekoppelt, sofern innerhalb einer vorgebbaren Zeit am zweiten Ansagegerät AG2 kein Endgerät der Sammelanschlußgruppe frei wird. Die maximale Haltezeit an dem Teilnehmeranschlußport als auch an dem zweiten Ansagegerät AG2 ist konfigurierbar.

Das in der Figur mit dem Bezugszeichen M versehene Datensichtgerät, das über den Schnittstellenprozessor IPT mit der Steuerung CS verbunden ist, ist einem Aufsichtsplatz zugeordnet. Auf dem Datensichtgerät M sind statistische Daten zum Sammelanschluß darstellbar, beispielsweise die Zahl der gerade wartenden Anrufe, die Zahl der in zurückliegenden Zeiteinheiten erfolgreich auf ein freies Endgerät der Sammelanschlußgruppe umgekoppelten Anrufe, und die maximale Wartezeit zwischen dem Eintreffen eines bestimmten Anrufes bis zu der Umkoppelung auf ein freies Endgerät. Das Programm zur Realisierung dieser Funktionen ist im Speicher CMEM2 abgelegt und wird von der Steuerung CS realisiert.

Den Teilnehmeranschlußports SLMP1...SLMPx können unterschiedliche Sammelanschlußrufnummern zugeordnet sein. Damit können am Sammelanschluß eintreffende Anrufe in Abhängigkeit der gewählten Sammelanschlußrufnummer auf bestimmte Endgeräte T21... T2x umgekoppelt werden. Die an dem Sammelanschluß eintreffenden Anrufe können auch sammelanschlußrufnummernindividuell mit unterschiedlicher Priorität auf freie Endgeräte der Sammelanschlußgruppe umgekoppelt werden. So kann beispielsweise bevorzugten Kunden eine Sammelanschlußrufnummer bekanntgegeben werden, die bei hohem Verkehrsaufkommen, insbesondere bei Engpässen im Sammelanschluß zu einer bevorzugten Verbindung mit einem freien Endgerät der Sammelanschlußgruppe führt.

Das in der Figur dargestellte Teilnehmerendgerät Tx ist den Teilnehmeranschlußports SLMP1...SLMPx vorgeschaltet. Diesem Endgerät ist das für sich bekannte Leistungsmerkmal "Anrufumleitung" sowie mindestens eine Sammelanschlußrufnummer zugeordnet. Anrufe mit der Sammelanschlußrufnummer werden also von der ersten Steuerung CC über das Endgerät Tx zu dem für dieses Endgerät Tx im Rahmen der Anrufumleitung eingestellten Ziel geleitet. Dieses Ziel ist vorzugsweise der aus den Teilnehmeranschlußports bestehende Sammelanschluß. Alternativ kann beispielsweise zur Einleitung eines Nachtbetriebs für das interne Endgerät Tx der Sprachspeicher VMS eingestellt werden. Ebenso kann eine in der Figur nicht dargestellte zweite Sammelanschlußschaltung vorgesehen sein, auf die beispielsweise eintreffende Anrufe bei einem Funktionsausfall der ersten Sammelanschlußschaltung geleitet werden.

## Patentansprüche

1. Fernsprechnebenstellenanlage mit Sammelanschluß, wobei eine dem Sammelanschluß zugeordnete erste Steuerung (CC, LTUC1, PBC11) dem Sammelanschluß zugeführte Anrufe auf interne Endgeräte (T21...T2x) einer Sammelanschlußgruppe umkoppelt,
**dadurch gekennzeichnet,**
daß ein der ersten Steuerung (CC, LTUC1, PBC11) und einer zweiten Steuerung (CS) zugeordnetes Steuerungsprogramm in der Weise ausgestaltet ist, daß ein dem Sammelanschluß zugeführter Anruf auf einen Teilnehmeranschlußport (SLMP1) der Fernsprechnebenstellenanlage umgekoppelt wird, der mit keinem Endgerät verbunden ist, daß die erste Steuerung (CC, LTUC1, PBC11) der zweiten Steuerung (CS) eine die Anrufumkopplung und den Teilnehmeranschlußport (SLMP1) bezeichnende erste Information zuführt, daß die zweite Steuerung (CS) zu der ersten Information eine zweite Information bildet, die ein internes Endgerät (T21) der Sammelanschlußgruppe, ein Ansagegerät (AG1, AG2), einen Sprachspeicher (VMS) oder eine externe Zieladresse (PBX' ) bezeichnet und daß die erste Steuerung (CC, LTUC1, PBC11) entsprechend der ihr von der zweiten Steuerung (CS) zugeführten zweiten Information den am Teilnehmeranschlußport (SLMP1) gehaltenen Anruf auf das interne Endgerät (T21), das Ansagegerät (AG1, AG2), den Sprachspeicher (VMS) oder die externe Zieladresse (PBX') umkoppelt.

2. Fernsprechnebenstellenanlage nach Anspruch 1,
**dadurch gekennzeichnet,**
daß den Teilnehmeranschlußports (SLMP1...) unterschiedliche Sammelanschlußrufnummern zugeordnet sind.

3. Fernsprechnebenstellenanlage nach Anspruch 1 oder 2,
**dadurch gekennzeichnet,**
daß dem Sammelanschluß ein internes Endgerät (Tx) der Fernsprechnebenstellenanlage vorgeschaltet ist, dem mindestens eine Sammelanschlußrufnummer zugeordnet ist, und daß für das interne Endgerät (Tx) eine Anrufumleitung zu dem Sammelanschluß, einem weiteren Sammelanschluß oder zu einem Sprachspeicher(VMS) einstellbar ist.

## Claims

1. Private branch exchange with line group, a first controller (CC, LTUC1, PBC11) which is assigned to the line group redirects calls sent to the line group to internal terminals (T21...T2x) of a line group, characterized in that a control program which is assigned to the first controller (CC, LTUC1, PBC11) and to a second controller (CS) is designed in such a way that a call sent to the line group is redirected to a subscriber connection port (SLMP1) of the private branch exchange, which subscriber connection port (SLMP1) is not connected to any terminal, in that the first controller (CC, LTUC1, PBC11) feeds to the second controller (CS) a first item of information which designates the call redirection and the subscriber connection port (SLMP1), in that the second controller (CS) forms, with respect to the first item of information, a second item of information which designates an internal terminal (T21) of the line group, an announcement device (AG1, AG2), a voice memory (VMS) or an external target address (PBX'), and in that the first controller (CC, LTUC1, PBC11) redirects the call held at the subscriber connection port (SLMP1) to the internal terminal (T21), the announcement device (AG1, AG2), the voice memory (VMS) or the external target address (PBX') in accordance with the second item of information fed to the said first controller (CC, LTUC1, PBC11) by the second controller (CS).

2. Private branch exchange according to Claim 1, characterized in that different line group numbers are assigned to the subscriber connection ports (SLMP1...).

3. Private branch exchange according to Claim 1 or 2, characterized in that an internal terminal (Tx) of the private branch exchange is connected upstream of the line group, to which internal terminal (Tx) at least one line group call number is assigned, and in that a call diversion to the line group, to a further line group or to a voice memory (VMS) can be set for the internal terminal (Tx).

## Revendications

1. Central téléphonique privé à raccordement collectif, une première commande (CC, LTUC1, PBC11) associée au raccordement collectif commutant des appels envoyés au raccordement collectif sur des terminaux internes (T21 à T2x) d'un groupe de raccordement collectif,
**caractérisé en ce que**
un programme de commande associé à la première commande (CC, LTUC1, PBC11) et à une seconde commande (CS) est tel qu'un appel envoyé au raccordement collectif soit commuté sur un accès de raccordement d'abonné (SLMP1 du central téléphonique privé, qui n'est relié à aucun terminal, la première commande (CC, LTUC1, PBC11) envoie à la seconde commande (CS) une première information désignant la commutation d'appel et l'accès (SLMP1) de raccordement d'abonné, la seconde commande (CS) forme en plus de la première information une seconde information, qui désigne un terminal interne (T21) du groupe de raccordement collectif, un appareil d'annonce (AG1, AG2), une mémoire (VMS) vocale ou une adresse externe (PBx') de destination, et la première commande (CC, LTUC1, PBC11) commute, en fonction de la seconde information qui lui est envoyée par la seconde commande (CS), l'appel maintenu à l'accés (SLMP1) de raccordement d'abonné sur le terminal interne (T21), l'appareil (AG1, AG2) d'annonce, la mémoire (VMS) vocale ou l'adresse (PBX') externe de destination.

2. Central téléphonique privé suivant la revendication 1,
**caractérisé en ce que**
des numéros d'appel de raccordement collectif différents sont associés aux accès (SLMP1... ) de raccordement d'abonné.

3. Central téléphonique privé suivant la revendication 1 ou 2,
**caractérisé en ce que**
un terminal interne (Tx) du central téléphonique privé, auquel est associé au moins un numéro d'appel de raccordement collectif, est branché en amont du raccordement collectif et un transfert d'appel vers le raccordement collectif, vers un autre raccordement collectif ou vers une mémoire (VMS) vocale peut être réglé pour le terminal interne (Tx).
